# EUROPÄISCHE PATENTSCHRIFT

(11) **EP 3 921 182 B1**
(45) Veröffentlichungstag und Bekanntmachung des Hinweises auf die Patenterteilung: **04.05.2022**
(21) Anmeldenummer: 20720902.4
(22) Anmeldetag: 19.03.2020
(51) Int. Cl.: B60B 7/04, B60B 7/06, B60B 7/12

(54) **EINSATZELEMENT FÜR EIN FAHRZEUGRAD SOWIE FAHRZEUGRAD MIT ZUMINDEST EINEM SOLCHEN EINSATZELEMENT**
APPURTENANCE FOR VEHICLE WHEEL AND WHEEL WITH AT LEAST ONE SUCH APPURTENANCE
ACCESSOIRE POUR ROUE DE VEHICULE ET ROUE AVEC AU MOINS UN TEL ACCESSOIRE

(30) Priorität: 09.04.2019 DE 102019109336
(43) Veröffentlichungstag der Anmeldung: 15.12.2021
(73) Patentinhaber: Otto Fuchs - Kommanditgesellschaft -, 58540 Meinerzhagen (DE); Jordan Spritzgusstechnik GmbH, 58636 Iserlohn (DE)
(72) Erfinder: VOGT, Sebastian, 58507 Lüdenscheid (DE); RISSE, Michael, 58708 Menden (DE); ERDMANN, Andreas, 58708 Menden (DE); BOSE, Sven Chandra, 58540 Meinerzhagen (DE); PETER, Tobias, 58540 Meinerzhagen (DE); TIMMERMANN, Thomas, 58540 Meinerzhagen (DE); NOWACK, Andreas, 58540 Meinerzhagen (DE)
(74) Vertreter: Haverkamp Patentanwälte PartG mbB
(86) Internationale Anmeldenummer: PCT/EP2020/057639
(87) Internationale Veröffentlichungsnummer: WO 2020/207744

(56) Entgegenhaltungen:
- DE-U1-202018 106 318
- FR-A1- 2 855 457

## Beschreibung

Gegenstand der Erfindung ist ein Einsatzelement für ein Fahrzeugrad, insbesondere ein Leichtmetallrad mit mehreren, mit Abstand zueinander angeordneten, rückseitig am Einsatzelement angeordneten Stützkörpern zum Abstützen des an dem Fahrzeugrad montierten Einsatzelementes an Stützflächen des Fahrzeugrades, wobei die Stützkörper einen zur Anlage an einer Stützfläche des Fahrzeugrades bringbaren Stützabsatz und einen Befestigungsfortsatz mit einem axialen Hohlkanal und mit zumindest einem mit axialem Abstand zu dem Stützabsatz angeordneten, nach außen abragenden Verriegelungsvorsprung zum Hintergreifen einer die Stützfläche des Fahrzeugrades durchgreifenden Montageöffnung aufweisen. Beschrieben ist des Weiteren ein Fahrzeugrad mit zumindest einem solchen Einsatzelement.

Leichtmetallfahrzeugräder sind in vielen Fällen als Speichenräder ausgeführt. Die Speichen verbinden die die Radbolzenbohrungen tragende Nabeneinfassung mit der Felge. Zwischen den Speichen befinden sich Speichenöffnungen. Eine solche Speiche kann auch aus zwei oder mehreren Speichensegmenten gebildet sein. Derartige Leichtmetallräder gibt es mit unterschiedlichem Design. Hierbei handelt es sich um Gussräder oder Schmiederäder.

Derartige Fahrzeugräder werden nicht nur hinsichtlich ihrer Räderform, sondern auch bezüglich ihrer Farbgebung in verschiedenen Varianten hergestellt und angeboten. Die Farbgebung erfolgt zumeist durch Lackieren bestimmter Flächen oder Flächenbereiche des Rades. Gemäß einer anderen Möglichkeit ein solches Rad farbig zu gestalten, wird in die Speichenöffnungen ein aus Kunststoff hergestellter Speicheneinsatz als Radapplikation eingesetzt. Diese Speicheneinsätze können dieselbe Farbe wie das Leichtmetallrad oder auch eine andere Farbgebung aufweisen. Auf diese Weise kann, ohne das Fahrzeugrad lackieren zu müssen, diesem eine Mehrfarbigkeit verliehen werden. Derartige Speicheneinsätze können auch zum ganz oder teilweisen Verblenden von Speichenöffnungen gestaltet sein, um durch solche Radapplikationen den Strömungswiderstandskoeffizient des Fahrzeugrades zu reduzieren. Gerade für diesen Zweck bieten sich derartige Speicheneinsätze an, da mit diesen mit deutlich geringerem Gewicht der Strömungswiderstandskoeffizient reduziert werden kann, verglichen mit einem Fahrzeugrad, bei dem die diesbezüglichen Flächen durch das Leichtmetall gebildet werden.

Kunststoffapplikationsteile werden bei Fahrzeugrädern auch in Form von Nabenkappen verwendet. Diese sind in der Axialbohrung des Rades durch eine Rastverbindung fixiert. Diese Kunststoffapplikationsteile sind im Unterschied zu den vorbeschriebenen Speicheneinsätzen allerdings keinen Fliehkräften ausgesetzt. Die bei einem Drehen des Fahrzeugrades auftretenden und auf einen Speicheneinsatz wirkenden Fliehkräfte sind nicht unbeträchtlich. Der Speicheneinsatz muss daher an dem Fahrzeugrad in einer Art und Weise befestigt sein, dass nicht die Gefahr besteht, dass sich der Speicheneinsatz löst. Zu diesem Zweck verfügt ein solcher Speicheneinsatz über mehrere, beispielsweise drei, mit Abstand zueinander angeordnete, rückseitig abragende Stützkörper. In den Stützkörpern ist jeweils eine Gewindebuchse aus Metall eingesetzt. Das Fahrzeugrad verfügt über komplementäre Stützflächen, an denen die Stützkörper bei der Montage eines solchen Speicheneinsatzes zur Anlage gebracht werden. Die Stützflächen weisen jeweils eine Bohrung auf, um einen Zugang zu den in den Stützkörpern eines solchen Speicheneinsatzes befindlichen Gewindebuchsen von der Rückseite des Rades her bereitzustellen. Befestigt wird ein solcher Speicheneinsatz meist mittels Schrauben, die von der Rückseite des Rades montiert werden. Diese durchgreifen die die Stützflächen durchgreifende Montageöffnung, typischerweise als Montagebohrung ausgeführt, und sind mit ihrem Gewindeschaft in den Gewindebuchsen jeweils eines Stützkörpers festgesetzt. Damit eine solche Schraubverbindung sich nicht selbsttätig löst, werden vielfach mit den Gewindebuchsen häufig mit Schraubensicherungsmedien versehene Titanschrauben eingesetzt. Durch diese Materialpaarung ist eine Korrosion verhindert. Zwar ist auf diese Weise ein solcher Speicheneinsatz dauerhaft sicher an dem Fahrzeugrad befestigt. Allerdings sind die hierfür erforderlichen Schrauben teuer. Wenn jeder Speicheneinsatz mit drei Schraubbefestigern am Fahrzeugrad gehalten ist und ein solches Rad fünf derartiger Einsätze trägt, werden 15 Schrauben benötigt. Damit ist der Materialeinsatz für eine Befestigung der Einsatzelemente je Fahrzeugrad recht hoch, was sich zudem nachteilig auf das Gewicht des Fahrzeugrades auswirkt. Durch den Einsatz von Schrauben kann ein solcher Einsatz aus Reparatur- oder Nachjustiergründen wieder gelöst werden.

Es sind Versuche vorgenommen worden, derartige Speicheneinsätze durch Clipsverbindungen an ein Speichen aufweisendes Leichtmetallrad anzuschließen, und zwar durch Anformen von rückseitig von dem Speicheneinsatz abragenden Rastfingern, die die zum Fahrzeug weisende Rückseite der Speichen hintergreifen. Problematisch bei dem Hinterclipsen der Speichen ist allerdings die vor allem bei Gussrädern relativ große in Kauf zu nehmende Toleranz der Speichendicke, mithin der Erstreckung einer solchen Speiche in axialer Richtung. Diese werkzeugverschleißbedingte Toleranz ist beträchtlich und kann 1 bis 1,5 mm betragen. Diese kann mit herkömmlichen Clipsverbindungen nicht ausgeglichen werden, insbesondere wenn zugleich eine dauerhafte spiel- und damit klapperfreie und sichere Verbindung gewährleistet werden soll.

Aus DE 20 2018 106 318 U1 ist ein Speicheneinsatz für ein Fahrzeugrad mit den Merkmalen des Oberbegriffs des Anspruchs 1 bekannt. Bei diesem vorbekannten, als Speicheneinsatz bezeichneten Einsatzelement sind an dessen Rückseite Stützkörper angeformt. Die Stützkörper verfügen über einen angeformten Befestigungsfortsatz, mit dem der Speicheneinsatz an dem Fahrzeugrad befestigt wird. Der Befestigungsfortsatz verfügt über einen Stützabsatz und einen von diesem beabstandeten Verriegelungsvorsprung. Der Verriegelungsvorsprung dient zum Hintergreifen einer radseitigen, als Bohrung ausgeführten Montageöffnung, sodass die zum Einsatzelement weisenden Randbereiche an dem Stützabsatz abgestützt sind, während der Verriegelungsvorsprung die Montagebohrung hintergreift. Der Befestigungsfortsatz selbst verfügt über wenigstens einen seiner Längserstreckung folgenden Spalt, sodass eine Durchmesserverringerung im Bereich seines Verriegelungsvorsprunges möglich ist, um diesen durch die Montagebohrung hindurch drücken zu können, bevor sich dieser an der Rückseite der Montagebohrung wieder entspannt, damit der Speicheneinsatz formschlüssig in axialer Richtung in bzw. an einer solchen Montagebohrung formschlüssig festgelegt ist. Ein solcher Speicheneinsatz trägt typischerweise mehrere derartiger Stützkörper. Die Stützkörper sind an das Einsatzelement angeformt, bestehen mithin aus demselben Hartkunststoffmaterial wie das Einsatzelement, welches ebenfalls typischerweise ein Kunststoffteil ist.

Bei diesem vorbekannten Speicheneinsatz ist von Vorteil, dass Schrauben oder andere mit einem Werkzeug zu setzende Befestiger nicht benötigt werden und dass eine Montage des Einsatzelementes von nur einer Seite des Fahrzeugrades typischerweise der Sichtseite her erfolgt.

Auch wenn bei diesem vorbekannten Speicheneinsatz eine Montage an das Fahrzeugrad vereinfacht ist, kann ein klapperfreier Sitz der Einsatzelemente nicht garantiert werden. Überdies bestehen Beschränkungen im Hinblick auf ein aufgrund von Fertigungstoleranzen erforderliche Kompensation in axialer Richtung. Überdies kann mitunter mit einem solchen Einsatzelement nicht die gewünschte Vorspannkraft erzielt werden. Als axiales Ausgleichselement dient ein Moosgummiring oder ein als O-Ring ausgeführter Silikonring, aus denen die axiale Vorspannkraft resultiert. Ein definierter Sitz des Einsatzelementes auf den Speichenflanken oder der Radschüssel ist allerdings nicht gegeben. Ein definierter Übergang, beispielsweise im Wege eines Spaltes zwischen einem solchen Einsatzelement und dem Fahrzeugrad ist abhängig von den Toleranzlagen von Einsatzelement und Fahrzeugrad.

Ausgehend von diesem diskutierten Stand der Technik liegt der Erfindung die Aufgabe zu Grunde, ein Einsatzelement der eingangs genannten, gattungsgemäßen Art für ein Fahrzeugrad dergestalt weiter zu bilden, dass die vorstehend genannten Nachteile reduziert, wenn nicht gar vermieden sind.

Gelöst wird diese Aufgabe erfindungsgemäß durch ein eingangs genanntes, gattungsgemäßes Einsatzelement, bei dem die Stützkörper als in radialer und axialer Richtung elastisch verformbare und mit ihrem Hohlkanal auf einem Stützkern sitzende Elastomerbauteile ausgeführt sind, welche Stützkerne einen radial abragenden Rückhalteflansch tragen und rückseitig an dem Einsatzelement gehalten sind, wobei jeder Stützkörper durch den Rückhalteflansch des diesen tragenden Stützkerns formschlüssig gegenüber einem Abziehen von dem Stützkern gehalten ist.

Bei diesem Einsatzelement sind die Stützkörper als Elastomerbauteile ausgeführt. Diese sind zumindest in demjenigen Abschnitt, mit dem die eine Montageöffnung, typischerweise als Montagebohrung ausgeführt, einfassenden Lochrandbereiche eingefasst sind, elastisch, und zwar sowohl in radialer Richtung als auch in axialer Richtung. Durch diese Beschaffenheit der als Elastomerbauteile ausgeführten Stützkörper können nicht nur Toleranzen in Bezug auf die Anordnung der Montagebohrungen am Fahrzeugrad und die Anordnung der Elastomerbauteile am Einsatzelement und damit in radialer Richtung durch die Nachgiebigkeit der Elastomerbauteile, sondern auch axiale Toleranzen ausgeglichen werden. Mit derartigen Elastomerbauteilen kann der Lochrandbereich einer Montageöffnung des Fahrzeugrades zwischen dem Stützabsatz und dem Verriegelungsvorsprung aufgrund der elastischen Eigenschaften des Stützkörpers unter nennenswerter Vorspannung stehend eingefasst sein. Dieses ist in einem bevorzugten Ausführungsbeispiel vorgesehen. Der Abstand der Fläche des Stützabsatzes, mit der der Stützkörper an der Stützfläche des Fahrzeugrades abgestützt ist, von dem radialen Verriegelungsvorsprung des Stützkörpers ist bei einem solchen Ausführungsbeispiel geringfügig kleiner als die Materialstärke einer radseitigen Montageöffnung, die von dem Stützkörper durchgriffen ist. Dieses bedeutet, dass gemäß einer ersten Ausgestaltung der Stützabsatz an der komplementären Stützfläche des Fahrzeugrades und der Verriegelungsvorsprung an der Rückseite der Montagebohrung unter Vorspannung anliegen, sodass der die Montagebohrung einfassende Lochrandbereich zwischen diesen beiden Widerlagern - dem Stützabsatz und dem Verriegelungsvorsprung - eingespannt ist. Damit ist ein solches Einsatzelement mit spiel- und klapperfreiem Sitz an das Fahrzeugrad angeschlossen.

Durch die vorbeschriebene Maßnahme gelingt es auch, dass das Einsatzelement an dem radseitigen Montageflansch mit einer Vorspannkraft gehalten ist, die zum einen eine Schraubenvorspannkraft substituiert und zum anderen auch für ein definiertes Anliegen des Einsatzelementes an der Fahrzeugradeaußenseite, etwa an der Speichenflanke sorgt. Erreichen lässt sich hiermit, dass ein umlaufend gleichmäßiges Spaltmaß zwischen dem Einsatzelement und der Speichenflanke eingestellt werden kann. Begünstigt wird Letzteres, wenn am Einsatzelement und/oder fahrzeugradseitig mehrere steg- oder kalottenartige Vorsprünge als Abstandselemente vorgesehen sind. Diese bilden ein Widerlager zum Einstellen einer Vorspannung, mit der die Stützkörper mit ihren Verriegelungsvorsprüngen gegen die vom Einsatzelement wegweisende Oberfläche einer Montageöffnung des Fahrzeugrades wirken. Ausgenutzt wird zum Aufbringen dieser Vorspannkraft die in axialer Richtung mögliche Komprimierung des Verriegelungsvorsprunges der elastomeren Stützkörper, die auf dem jeweiligen Stützkern durch den daran in radialer Richtung auskragenden Rückhalteflansch gehalten sind.

Die Materialstärke des Verriegelungsvorsprunges in axialer Richtung ist dabei typischerweise derart gestaltet, dass eine hinreichende Vorspannkraft auch unter Berücksichtigung aller Toleranzlagen in axialer Richtung bei einer Montage des Einsatzelementes bereitgestellt werden kann.

Ausgenutzt werden die elastomeren Eigenschaften des Stützkörpers in axialer Richtung für die Montage, und zwar dahingehend, dass der Verriegelungssprung des Stützkörpers soweit durch die Montageöffnung hindurchgedrückt werden kann, dass dieser die Montageöffnung an seiner von dem Einsatzelement wegweisenden Seite hintergreift. Zugleich wird bei der Montage der Verriegelungsvorsprung in radialer Richtung beim Hindurchführen desselben durch die Montageöffnung komprimiert, sodass auch die elastomeren Eigenschaften des Stützkörpers in radialer Richtung bei der Montage genutzt werden. Gemäß einer weiteren Ausgestaltung dient einem Befestigungspunkt neben dem Rückhalteflansch als Widerlager eine Anordnung von im Kontaktbereich zwischen dem Fahrzeugrad und dem Einsatzelement angeordneten Abstandshaltern (sogenannten Spacern), die beispielsweise als Steg- oder kalottenartige Vorsprünge ausgeführt sein können. Die Vorspannkraft resultiert dann aus der elastischen Nachgiebigkeit des Verriegelungsvorsprunges des Stützkörpers eines Befestigungspunktes. Damit wirkt auf die Verbindung zwischen Einsatzelement und Fahrzeugrad auch bei einer solchen Ausgestaltung eine Vorspannkraft. In einer weiteren Ausgestaltung eines solchen Ausführungsbeispiels sind die Abstandshalter an dem Einsatzelement angeordnet und ebenfalls Körper mit elastomeren Eigenschaften.

Unabhängig von seiner Auslegung kann auf diese Weise das Einsatzelement mit dem Fahrzeugrad ähnlich einer Schraubverbindung verspannt sein. Dieses gewährleistet nicht nur eine sichere Befestigung des Einsatzelementes am Fahrzeugrad, sondern sorgt zugleich für einen klapperfreien Sitz, selbst dann wenn das Fahrzeugrad dynamischen Beanspruchungen ausgesetzt ist. Auch in radialer Richtung kann der Stützkörper mit seinem zwischen dem Stützabsatz und dem Verriegelungsvorsprung befindlichen Halteabschnitt unter Vorspannung gegen die Montageöffnungswandung wirken. Gleiches gilt bei Vorsehen von Abstandselementen, die zumindest mit einem vektoriellen Anteil in Umfangsrichtung wirken, beispielsweise gegen eine Belüftungslochflanke.

Die Stützkörper sind in axialer Richtung formschlüssig auf dem jeweiligen Stützkern durch den Rückhalteflansch gegenüber einem Abziehen von diesem gehalten. Der in radialer Richtung von dem gegenüber dem Stützkern härteren Stützkern abragende Rückhalteflansch bildet für den als Elastomerbauteil ausgeführten Stützkörper ein Widerlager. Wird auf das Einsatzelement eine Abziehkraft (Lösekraft) ausgeübt, wirken die die Montageöffnung einfassenden rückseitigen Randbereiche gegen den Verriegelungsvorsprung des Stützkörpers. Durch den Anschlag des Stützkörpers an dem Rückhalteflansch bewirkt eine solche Lösekraft eine Komprimierung des Verriegelungsvorsprunges in axialer Richtung mit der Folge, dass sich dieser bestrebt ist, in radialer Richtung sich auszudehnen. Der in axialer Richtung wirkende Formschluss zwischen dem Stützkörper und dem Fahrzeugrad bzw. der von dem Stützkörper durchgriffenen Montageöffnung wird auf diese Weise verstärkt, sodass auf diese Weise ein Lösen des Einsatzelementes von dem Fahrzeugrad nicht, jedenfalls nicht zerstörungsfrei möglich ist. Gelöst werden kann ein solches Einsatzelement von dem Fahrzeugrad, wenn der Verriegelungsvorsprung des elastomeren Stützkörpers aufgrund der anliegenden Lösekraft abgeschert wird. Auch dieses ist letztendlich unproblematisch, da bei einer erneuten Montage des Einsatzelementes nur der elastomere Stützkörper ausgetauscht zu werden braucht. Um diese Verriegelung zwischen dem auf dem Stützkern sitzenden Stützkörper und dem Montageflansch des Fahrzeugrades zu erzielen, sind die diesbezüglich in axialer Richtung einander kontaktierenden Flächen in einer quer zur Längserstreckung des Stützkörpers verlaufenden Ebene angeordnet. In einem Ausführungsbeispiel befinden sich diese zusammenwirkenden Flächen in einer Ebene, die rechtwinkelig zur Längsachse des Stützkörpers bzw. Stützkerns verläuft. Die diesbezüglich zusammenwirkenden Flächen können auch mit einem geringen Winkel zu den vorbeschriebenen Ebenen geneigt ausgerichtet sein, insbesondere auch gegensinnig zur Abziehrichtung. Bei einer solchen Auslegung unterstützt die rückseitige umlaufenden Kante der Montageöffnung das Abscheren des Verriegelungsvorsprunges, wenn hinreichend hohe Kräfte aufgewendet werden. Dieses kann, wenn Einsatzelemente ausgetauscht werden sollen, zweckmäßig sein.

Diese als Elastomerbauteile ausgeführten Stützkörper sitzen mit ihrem Hohlkanal auf einem Stützkern. Der Stützkern ist im Unterschied zu den Stützkörpern kein Elastomerbauteil. Während die Stützkörper beispielsweise aus einer Weichkunststoffkomponente hergestellt sind, sind die Stützkerne beispielsweise aus einer Hartkunststoffkomponente hergestellt. Als Werkstoff zum Herstellen der Stützkörper eignet sich ein solcher mit einer Shore-A-Härte 55 - 85. Eingesetzt werden kann hierfür beispielsweise ein Silikonwerkstoff. Die demgegenüber deutlich härteren Stützkerne sind, wenn aus Kunststoff hergestellt, beispielsweise aus einem Polyamid (mit oder auch ohne Faserverstärkung) hergestellt. Es versteht sich, dass die Stützkerne auch aus Metall hergestellt sein können. Letzteres bietet sich an, wenn es sich bei den Einsatzelementen um Metallteile handelt, da dann die Stützkerne mittels einer stofflichen Fügeverbindung an die eigentlichen Einsatzelemente angeschlossen werden können. Die Stützkerne dienen zum einen zum Halten der Stützkörper an dem Einsatzelement. Zum anderen dienen diese als Widerlager zum Aufbringen der vorbeschriebenen Vorspannung. Zu diesem Zweck verfügt jeder Stützkern über eine an seinem freien Ende oder in seinem diesbezüglichen Endbereich angeordneten Rückhalteflansch, der in radialer Richtung abragt. Durch den Rückhalteflansch ist der Stützkörper auf dem Stützkern in axialer Richtung gegenüber einem Abziehen desselben von dem Stützkern formschlüssig gehalten. Das freie Ende des Stützkörpers wird in aller Regel durch den Abschluss des Verriegelungsvorsprunges gebildet. Somit ist bei einer solchen Ausgestaltung der Verriegelungsvorsprung des Stützkörpers an dem Rückhalteflansch abgestützt. Damit bewirkt der Rückhalteflansch, dass die auf der Rückseite der Montageöffnung des Fahrzeugrades anliegende Verriegelungsfläche des Verriegelungsvorsprunges mit entsprechender Vorspannung an dem rückseitigen Lochrandbereich der Montagebohrung unter Vorspannung anliegen kann. Das dem Rückhalteflansch gegenüberliegende Widerlager für einen solchen als Elastomerbauteil ausgeführten Stützkörper bildet gemäß einer Ausgestaltung die Rückseite des Einsatzelementes bzw. ein oder mehrere an der Rückseite des Einsatzelementes angebrachte Stützelemente, beispielsweise in radialer Richtung zum Stützkern angeordneten Stützleisten. Auch andere Stützelemente können vorgesehenen sein, beispielsweise ein Widerlagerabsatz, auf dem die Grundfläche des Stützabsatzes des Stützkörpers abgestützt ist. Um die gewünschte Vorspannung, mit dem die Lochrandbereiche der Montagebohrung zwischen dem Stützabsatz und dem Verriegelungsvorsprung eines solchen Stützkörpers eingespannt sind, zu erzielen, ist es nicht erforderlich, dass die Vorspannkraft umlaufend gleich ist. Werden als einsatzelementseitige Widerlager beispielsweise mehrere Stützleisten in einer radialen Anordnung zum Stützkern verwendet, ist die Grundfläche des Stützabsatzes an Schmalseiten dieser Leisten abgestützt, sodass im Bereich der Abstützung des Stützabsatzes an den Stützleisten eine Kraftkonzentration erfolgt. In der Flucht dieser Stützleisten wirkt der Stützabsatz auf die komplementäre Stützfläche des Fahrzeugrades mit einer höheren Vorspannung als in den zwischen den Stützleisten befindlichen Stützabsatzbereichen. Bei einer solchen Ausgestaltung erfolgt in Abhängigkeit von der Höhe des Stützabsatzes eine gewisse Vergleichmäßigung der Vorspannkraft über die Anlagefläche des Stützabsatzes an der komplementären Stützfläche des Fahrzeugrades. Dennoch bleiben die Vorteile einer auf die beispielsweise als Stützleisten ausgeführten Widerlagerelemente bemerkbar.

In einer Ausgestaltung ist der Stützabsatz als Hohlkammerbauteil ausgeführt, der mehrere durch jeweils einen in radialer Richtung verlaufenden Steg getrennte Hohlkammern aufweist. Bei einer solchen Ausgestaltung können in besonderer Weise Anlagetoleranzen ausgeglichen werden, wenn beispielsweise die Stützfläche des Fahrzeugrades herstellungsbedingt nicht exakt parallel zu der komplementären Fläche des Stützabsatzes ausgeführt ist. Ein solcher Ausgleich ist grundsätzlich auch mit einem massiv ausgeführten Absatz des Stützkörpers möglich, jedoch erlaubt ein als Hohlkammerbauteil ausgeführter Stützabsatz diesbezüglich eine bessere Kompensation unter Gewährleistung einer umfänglich möglichst einheitlichen auf die Stützfläche des Fahrzeugrades wirkenden Vorspannung. Die Hohlkammern können in Richtung zur Rückseite des Einsatzelementes geöffnet sein, was die Herstellung des Stützabsatzes vereinfacht.

Ein solcher als Elastomerbauteil ausgeführter Stützkörper ist typischerweise als Spritzgussteil hergestellt, kann aber auch mit additiven oder anderen Fertigungsverfahren hergestellt werden.

Die auf die Lochrandbereiche der Montageöffnung des Fahrzeugrades wirkende Vorspannung wird dadurch erzielt, dass der Abstand der Verriegelungsfläche des Verriegelungsvorsprunges von der zu der Stützfläche des Fahrzeugrades weisenden Fläche des Stützvorsprunges im ungespannten Zustand etwas kleiner ist als die Materialdicke des Fahrzeugrades im Bereich seiner Montageöffnungen. Die Elastizität des Stützabsatzes eines solchen Stützkörpers kann auch genutzt werden, damit der Verriegelungsvorsprung des Stützkörpers soweit durch eine Montageöffnung des Fahrzeugrades hindurchgedrückt werden kann, dass dieser innerhalb der Montagebohrung im Durchmesser reduzierte Verriegelungsvorsprung sich ohne Weiteres auf der Rückseite der Montageöffnung zum Hintergreifen derselben entspannt, auch wenn bei dem Montagevorgang der Verriegelungsvorsprung insgesamt oder in bestimmten Abschnitten in Richtung zum Stützabsatz elastisch verstellt worden ist.

In einer anderen Ausgestaltung ist der Verriegelungsvorsprung mit seiner Verriegelungsfläche unter Vorspannung auf der Rückseite der Montageöffnung stehend abgestützt, wobei das Gegenwiderlager die Anlageanordnung zwischen dem Einsatzelement und dem Fahrzeugrad über Abstandselemente erfolgt. Diese Abstandselemente befinden sich im Bereich des äußeren Umfanges auf der von der Sichtseite her nicht erkennbaren Seite eines solchen Einsatzelementes.

Zum Aufbringen einer verstärkten Vorspannung in axialer Richtung auf die Lochrandbereiche der Montagebohrung kann vorgesehen sein, dass die Verriegelungsfläche des Stützvorsprunges des Stützkörpers zumindest in seinem inneren Bereich nicht parallel zur Anlagefläche des Fahrzeugrads, sondern geneigt zu dieser verläuft. Durch eine solche Maßnahme ist die Formstabilität des Verriegelungsvorsprunges gegenüber einer Verstellung in Richtung zum Stützabsatz hin verstärkt. Zudem wirkt dann auf den Übergang zwischen der Wandung der Montagebohrung und den diese einfassenden Flächenbereiche eine erhöhte Vorspannung. Eine solche Maßnahme kann auch zur Anpassung an die Geometrie der Montageöffnung vorgenommen werden, wenn etwa an der Rückseite der Montageöffnung eine Fase vorgesehen ist.

Der Stützkern kann geschlitzt oder ungeschlitzt ausgeführt sein, wobei ein solcher Schlitz zum Ausbilden eines Spaltes in längsaxialer Richtung verläuft. Ist der Stützkern geschlitzt, wobei typischerweise bei einer solchen Ausgestaltung der Stützkern in zwei Stützkernsegmente geteilt ist, können diese in radialer Richtung mit ihrem Rückhalteflansch verstellt, insbesondere aufeinander zu zur Durchmesserverringerung des Rückhalteflansches verstellt werden. Bei einer solchen geschlitzten Ausführung des Stützkerns kann daher der maximale Durchmesser des Rückhalteflansches größer sein als der Durchmesser der Montageöffnung. In Querrichtung zu der Erstreckung des maximalen Durchmessers des Rückhalteflansches ist der Durchmesser hingegen nicht größer als der Durchmesser der Montageöffnung. Das durch den Rückhalteflansch gebildete Widerlager hintergreift bei einer solchen Ausführung die Montageöffnung. Zum Erzielen einer Abzugssicherung kann vorgesehen sein, in den die beiden Stützkernsegmente trennenden Spalt einen Sicherungsstift einzusetzen, sodass eine Bewegung der Stützkernsegmente in radialer Richtung aufeinander zu, wodurch der Durchmesser im Bereich des Rückhalteflansches reduziert werden würde, blockiert ist. Ein solcher Sicherungsstift kann, was in einem Ausführungsbeispiel vorgesehen ist, in längsaxialer Richtung verschiebbar an dem Stützkern vormontiert sein. Bei einer solchen Ausgestaltung verfügt der Sicherungsstift beispielsweise über Führungszapfen, die in den die Stützkernsegmente trennenden Spalte eingreifen. Ein solcher Sicherungsstift weist gemäß einer Ausgestaltung im Durchmesser unterschiedliche Abschnitte auf. Im Bereich seines Kopfes, oder einen solchen bildend, befindet sich ein Blockierabschnitt, der zwischen die beiden Stützkernsegmente zum Blockieren der vorbeschriebenen Durchmesserreduzierungsbewegungen eingreift. Ein daran angeformter Abschnitt ist im Durchmesser geringer, sodass, wenn sich dieser Abschnitt im Bereich des Rückhalteflansches befindet, die Stützkernsegmente aufeinander zu verstellt werden können. In dieser Position befindet sich der Sicherungsstift bei der Montage und bei einer Demontage des Einsatzelementes an das Fahrzeugrad bzw. von dem Fahrzeugrad. Nach einer Montage wird der Sicherungsstift dann in den Spalt zum Blockieren einer Lösebewegung eingeschoben.

In einer anderen Ausgestaltung ist der Stützkern ungeschlitzt. Bei einer solchen Ausgestaltung ist der Durchmesser des Verriegelungsvorsprunges des als Elastomerbauteil ausgeführten Stützkörpers größer als derjenige des Rückhalteflansches und der Montageöffnung. Der Durchmesser des Rückhalteflansches ist bei dieser Ausgestaltung kleiner als der Durchmesser der Montageöffnung des Fahrzeugrades, sodass dieser ohne Weiteres durch die Montageöffnung hindurchgeführt werden kann. In gleicher Weise wie dieses zu dem vorangegangenen Ausführungsbeispiel beschrieben ist, ist die Vorderseite des Verriegelungsvorsprunges an dem Rückhalteflansch abgestützt.

In einer bevorzugten Ausgestaltung sitzt der Stützkörper mit seiner Hohlkanalwandung unter Vorspannung stehend auf dem Stützkern. Durch diese Maßnahme ist der Befestigungssitz verbessert. Zudem unterstützt diese Maßnahme einen klapperfreien Sitz des Einsatzelementes am Fahrzeugrad.

Die Erfindung ist nachfolgend unter Bezugnahme auf die beiliegenden Figuren anhand von Ausführungsbeispielen beschrieben. Es zeigen:
- **Fig. 1:**: Eine Draufsicht eines Fahrzeugradsegmentes mit einem eine Radöffnung zum Teil verblendenden, an dem Fahrzeugrad montiertem Einsatzelement;
- **Fig. 2:**: eine Rückansicht des Fahrzeugradsegmentes der Figur 1;
- **Fig. 3:**: eine vergrößerte Darstellung eines Befestigungspunktes, mit dem das Einsatzelement an dem Fahrzeugrad befestigt ist;
- **Fig. 4:**: in einer Alleindarstellung das Einsatzelement der Anordnung der Figur 3 mit einem rückseitig daran angeformten Stützkern;
- **Fig. 5a, 5b:**: eine Darstellung eines auf dem Stützkern sitzenden Stützkörpers in einer Seitenansicht (Fig. 5a) sowie in einer perspektivischen Ansicht mit Blick auf seine Grundfläche (Fig. 5b);
- **Fig. 6:**: eine Schnittdarstellung durch den Befestigungspunkt der Figur 3 mit einer Schnittlinie in radialer Richtung zur Nabe des Fahrzeugrades;
- **Fig. 7:**: ein Befestigungspunkt zum Befestigen eines Einsatzelementes gemäß einer Ausgestaltung mit Sicherungsstift an einem Fahrzeugrad in einer Darstellung entsprechend der Darstellung der Figur 3;
- **Fig. 8:**: ein an der Rückseite des Einsatzelementes der Figur 7 angeformter Stützkern mit Sicherungsstift in einer perspektivischen Alleindarstellung des Einsatzelementes,
- **Fig. 9:**: ein auf dem Stützkern der Figur 8 sitzenden Stützkörper in Alleindarstellung in einer Seitenansicht und
- **Fig. 10:**: eine Schnittdarstellung durch den in Figur 7 gezeigten Befestigungspunkt mit einer Schnittlinie in radialer Richtung zur Nabe des Fahrzeugrades.

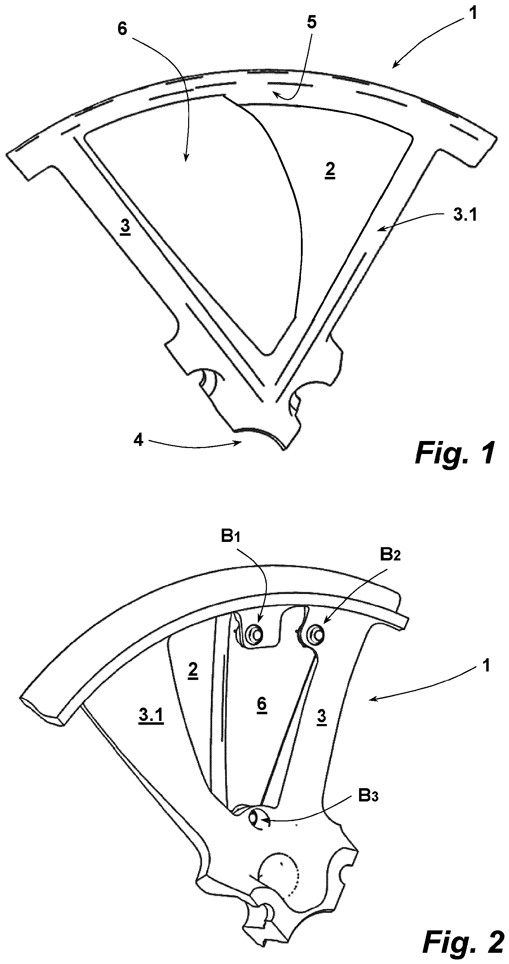

Ein Fahrzeugrad 1 ist in Figur 1 mit nur einem Segment gezeigt. Das aus einer Aluminiumlegierung hergestellte Leichtmetallfahrzeugrad 1 verfügt über mehrere in Umfangsrichtung verteilt angeordnete Raddurchbrechungen 2. Jede Raddurchbrechung 2 ist durch zwei Speichen 3, 3.1 in Umfangsrichtung begrenzt. In radialer Richtung ist die Raddurchbrechung 2 durch die zum Nabenbereich 4 weisende Seite des Felgenbettes 5 begrenzt. Die Raddurchbrechung 2 ist durch ein bei dem dargestellten Ausführungsbeispiel als Kunststoffteil ausgeführtes Einsatzelement 6 zum Teil verblendet. Die verbliebene Restöffnung der Raddurchbrechung 2 dient zum Zuführen von Luft bei einer Drehung des Rades 1 zu einer radinnenseitig angeordneten Bremsscheibe. Neben designerischen Aspekten dient das Einsatzelement 6 zugleich zum definierten Zuführen von Luft durch die verbliebene Restöffnung der Raddurchbrechung 2.

Die Befestigung des Einsatzelementes 6 erfolgt bei dem dargestellten Ausführungsbeispiel über drei Befestigungspunkte, wobei eine Montage des Einsatzelementes 6 an dem Fahrzeugrad 1 werkzeuglos erfolgt. Die Befestigungspunkte sind in der Rückansicht des Fahrzeugrades 1 der Figur 2 erkennbar und darin mit den Bezugszeichen B₁, B₂ und B₃ kenntlich gemacht. Die Befestigung des Einsatzelementes 6 an dem Fahrzeugrad 1 ist nachstehend näher anhand des Befestigungspunktes B₁ erläutert. Diese Ausführungen gelten gleichermaßen für die Befestigungspunkte B₂ und B₃.

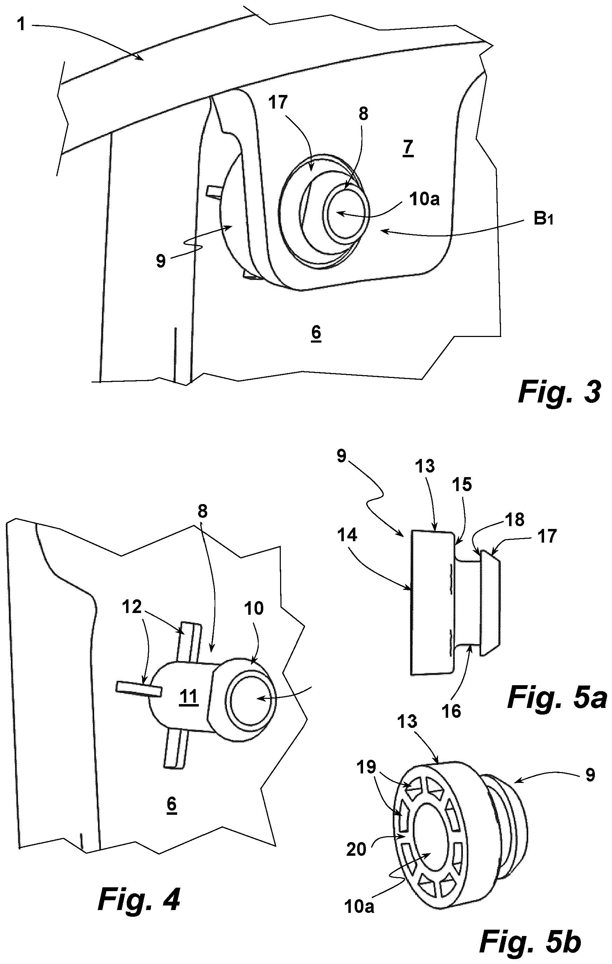

Der in Figur 3 in einer vergrößerten perspektivischen Darstellung gezeigte Befestigungspunkt B₁ ist wie folgt ausgebildet: Das Fahrzeugrad 1 verfügt über einen Montageflansch 7, dessen in Figur 3 nicht erkennbare Rückseite eine Stützfläche bildet. In dem Montageflansch 7 ist eine als Montagebohrung ausgeführte Montageöffnung eingebracht. Diese ist in der Figur 3 nicht erkennbar, da in diese ein auf einem Stützkern 8 sitzender Stützkörper 9 eingreift und mit Teilen die Montagebohrung durchgreift. Der Stützkern 8, ist, wie aus Figur 4 erkennbar, an die Rückseite des Einsatzelementes 6 angeformt, besteht mithin aus derselben Hartkunststoffkomponente wie das Einsatzelement 6 selbst. Bei dem dargestellten Ausführungsbeispiel ist das Einsatzelement 6 mit seinen Stützkernen 8 aus einem Polyamidwerkstoff hergestellt. Bei dem Stützkern 8 handelt es sich bei dem dargestellten Ausführungsbeispiel um ein Rohrstück, welches an seinem freien, von der Rückseite des Einsatzelementes 6 entfernten Ende einen Rückhalteflansch 10 trägt. Der Rückhalteflansch 10 kragt über dem Durchmesser eines ringzylindrischen Schaftabschnittes 11 hervor, weist mithin einen größeren Durchmesser auf, als der Durchmesser des Schaftabschnittes 11. Der maximale Durchmesser des Rückhalteflansches 10 ist um ein notwendiges Montagespiel kleiner als der Durchmesser der den Montageflansch 7 durchgreifenden Montagebohrung. Im Bereich der Anbindung des Schaftabschnittes 11 des Stützkerns 8 an die Rückseite des Einsatzelementes 6 befinden sich mehrere, bei dem dargestellten Ausführungsbeispiel vier, radial zum Schaftabschnitt 11 angeordnete Stützleisten 12. Diese sind an die Rückseite des Einsatzelementes 6 an den Schaftabschnitt 11 angeformt. Mit ihren der Längserstreckung folgenden Schmalseiten weisen diese zum Rückhalteflansch 10.

Auf dem Stützkern 8 sitzt der Stützkörper 9, der zu diesem Zweck einen Hohlkanal 10a (siehe Figur 5b) aufweist. Der Stützkörper 9 ist ein Elastomerbauteil, weist mithin gegenüber dem Material des Stützkerns 8 eine deutlich geringere Härte auf. Der Stützkörper 9 ist aus einem Weichkunststoff, und zwar bei dem dargestellten Ausführungsbeispiel aus einem Silikonwerkstoff mit einer Shore-A-Härte 65 hergestellt. Auf Grund seiner elastischen Eigenschaften kann der Stützkörper 9 ohne Weiteres über den Rückhalteflansch 10 des Stützkerns auf den Schaftabschnitt 11 aufgeschoben werden.

Der Stützkörper 9 verfügt über einen Stützabsatz 13, der mit seiner Grundfläche 14 an den zu dem Rückhalteflansch 10 weisenden Schmalseiten der Stützleisten 12 anliegt. Die der Grundfläche 14 gegenüberliegende Fläche des Stützabsatzes 13 ist eine Anlagefläche 15, an der der zum Einsatzelement 6 weisende Lochrandbereich des Montageloches als komplementäre Stützfläche anliegt. Angeformt ist an den Stützabsatz 13 ein Halteabschnitt 16, dessen Durchmesser im Wesentlichen dem Durchmesser der Montagebohrung entspricht. An den Halteabschnitt 16 ist ein bei dem dargestellten Ausführungsbeispiel umlaufender Verriegelungsvorsprung 17 mit einer zu der Anlagefläche 15 weisenden Verriegelungsfläche 18 angeformt. Der Verriegelungsvorsprung 17 kragt über dem Halteabschnitt 16 aus. Durch den Halteabschnitt 16 ist der Stützkörper 9 tailliert. Der Halteabschnitt 16 und der Verriegelungsvorsprung 17 bilden zusammen einen Befestigungsfortsatz. Wie aus Figur 3 zu erkennen ist, ist die von dem Stützabsatz 13 wegweisende Seite des Verriegelungsvorsprunges 17 kegelstumpfförmig ausgeführt. Diese Kegelstumpfform geht in eine gleichartige Kegelstumpfform des Rückhalteflansches 10 über (siehe auch Figur 3).

Bei dem dargestellten Ausführungsbeispiel ist der Stützabsatz 13 als Hohlkammerformteil ausgeführt und verfügt über mehrere umfänglich verteilt angeordnete Hohlkammern 19. Zwei benachbarte Hohlkammern 19 sind jeweils durch einen in radialer Richtung verlaufenden Steg 20 voneinander getrennt.

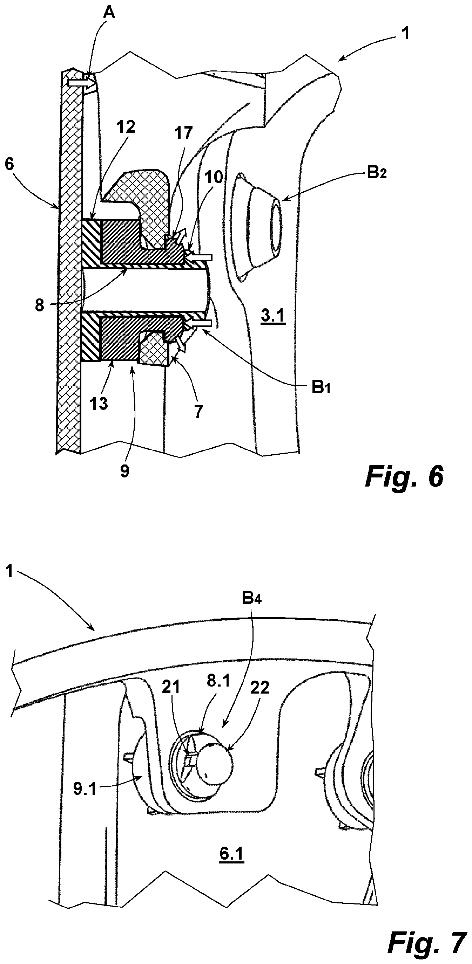

Der Befestigungspunkt B₁ ist in Figur 6 in einem Schnitt gezeigt. Der Stützkörper 9 sitzt auf dem Schaftabschnitt 11 des Stützkerns 8. Die verjüngte Vorderseite des Verriegelungsvorsprunges 17 stützt sich an der zu dem Einsatzelement 6 weisenden Seite des Rückhalteflansches 10 ab. Auf diese Weise ist der Stützkörper 9 in axialer Richtung form- und kraftschlüssig auf dem Stützkern 8 gehalten. Die Grundfläche 14 des Stützabsatzes 13 ist bei diesem Ausführungsbeispiel auf den Stützleisten 12 abgestützt. Die Abstützung des Stützkörpers 8 über seine Grundfläche 14 an den Stützleisten 12 - einerseits - und mit der Vorderseite seines Verriegelungsvorsprunges 17 an dem Rückhalteflansch 10 des Stützkerns 8 - andererseits - steht unter einer gewissen Vorspannung. Aufgenommen in den Halteabschnitt 16 des Stützkörpers 9 ist der Lochrandbereich der den Montageflansch 7 durchgreifenden Montagebohrung. Die axiale Erstreckung des Halteabschnittes 11 des Stützkörpers 9 ist etwas geringer als die Materialstärke des Montageflansches 7, sodass der Lochrandbereich der Montagebohrung zwischen der Anlagefläche 15 des Stützabsatzes 13 und der Verriegelungsfläche 18 des Verriegelungsvorsprunges 17 eingespannt ist. Auf diese Weise ist eine sichere und unter Vorspannung stehende Befestigung der Befestigungspunkte B₁ bis B₃ des Einsatzelementes 6 an dem Fahrzeugrad 1 gewährleistet.

In Figur 6 ist beispielhaft an die Innenseite des Einsatzelementes 6 ein Abstandselement A angeformt. Dieses ist kalottenartig ausgeführt. Durch das Abstandselement A ist das Einsatzelement 6 an der nach außen weisenden Seite des Fahrzeugrades 1 abgestützt. Das Abstandselement A befindet sich in unmittelbarer Nachbarschaft zu dem umfänglichen Abschluss des Einsatzelementes 6. Das Einsatzelement 6 trägt mehrere, mit Abstand zueinander angeordnete Abstandselemente A zum Abstützen des Einsatzelementes 6 an der Außenseite des Fahrzeugrades 1. Diese Abstützung dient zum Bereitstellen einer einheitlichen Fuge bzw. eines einheitlichen Spaltmaßes zwischen dem Einsatzelement 6 und der Sichtseite des Fahrzeugrades 1. Die Abstützung des Einsatzelementes 6 mittels der Abstandselemente A an der zum Einsatzelement 6 weisenden Seite des Fahrzeugrades 1 stellt zugleich ein Widerlager dar, um mit den auf den Stützkernen 8 sitzenden elastomeren Stützkörpern 9 bzw. deren in axialer Richtung elastisch komprimierbaren Verriegelungsvorsprüngen 17 eine Vorspannung zu erzeugen, die einen spiel- und klapperfreien Sitz des Einsatzelementes 6 am Fahrzeugrad 1 gewährleistet. Die axiale Länge des Stützkörpers 9 und insbesondere seines Verriegelungsvorsprunges 17 und die Auslegung des Stützkerns 8 mit seinem Rückhalteflansch 10 sind so aufeinander abgestimmt, dass bei an dem Fahrzeugrad 1 montierten Einsatzelement 6 der Verriegelungsvorsprung 17 in axialer Richtung komprimiert ist. Die radiale Ausdehnung des Verriegelungsvorsprunges 17 ist in Figur 6 durch Blockpfeile angedeutet. Die aus der elastischen Komprimierung des Verriegelungsvorsprunges 17 in axialer Richtung resultierende Rückstellkraft nutzt als Widerlager die durch den Rückhalteflansch 10 radial auskragende Widerlagerfläche - einerseits - und die Abstützung des Einsatzelementes 6 über seine Abstandselemente A außenseitig am Fahrzeugrad 1 gebildete Widerlager - andererseits -, wodurch der Verriegelungsvorsprung 17 gegen die von dem Einsatzelement 6 wegweisenden Oberfläche des Montageflansches 7 in seinem die Montageöffnung einfassenden Bereichen wirkt. Gleichzeitig ist das Einsatzelement 6 über die Abstandselemente A außenseitig am Fahrzeugrad 1 abgestützt. In Figur 6 ist die vorbeschriebene Abstützung an den Widerlagern - dem Rückhalteflansch 10 und der Fahrzeugradaußenseite - durch Blockpfeile kenntlich gemacht.

In einer Weiterbildung ist vorgesehen, dass sich der Stützkörper 9 mit seiner Grundfläche 14, wenn an dem Montageflansch 7 des Fahrzeugrades 1 angeschlossen, nicht an den Stützleisten 12 abstützt, sondern dass das Widerlager zum Aufbringen der gewünschten Vorspannkraft durch die Anlageanordnung der Abstandselemente A an der Außenseite des Fahrzeugrades 1 erfolgt. Bei dieser Ausgestaltung ist zwischen der Grundfläche 14 des Stützabsatzes 13 des Stützkörpers 9 und den Stützleisten 12 ein gewisses Spiel vorhanden. Somit wirken als Widerlager zum Aufbringen der gewünschten Vorspannung bei dieser Ausgestaltung der Rückhalteflansch 10 - einerseits - und die Anlageanordnung der Abstützelemente A an der Außenseite des Fahrzeugrades 1 - andererseits. Es versteht sich, dass die Abstandselemente auch fahrzeugradeseitig angeordnet sein können.

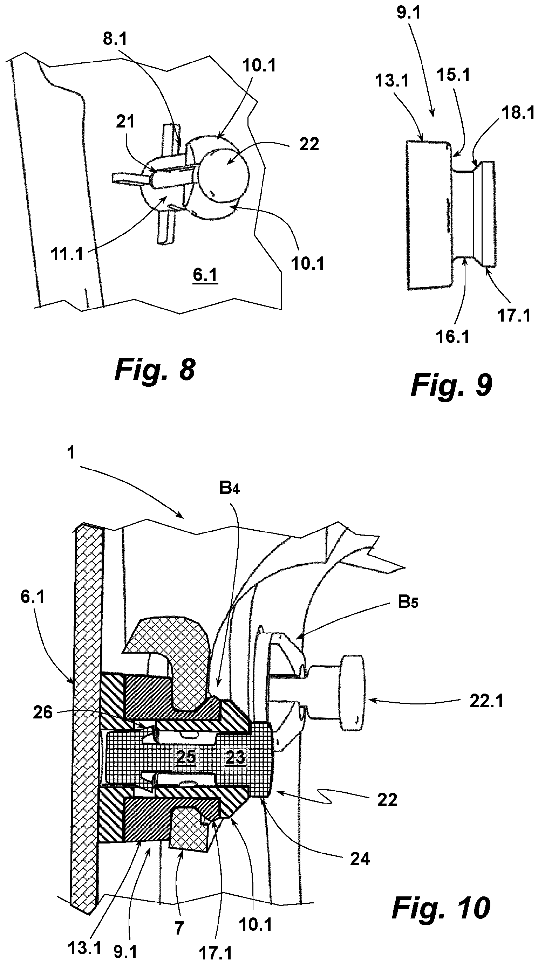

Figur 7 zeigt ein weiteres Ausführungsbeispiel eines Befestigungspunktes B₄ zum Befestigen eines weiteren Einsatzelementes 6.1 an dem Fahrzeugrad 1. Das Einsatzelement 6.1 ist prinzipiell genauso aufgebaut wie das vorbeschriebene Einsatzelement 6. Daher gelten die diesbezüglichen Ausführungen auch für das Einsatzelement 6.1. In Figur 7 ist ein Befestigungspunkt B₄ von tatsächlichen drei Befestigungspunkten gezeigt, wie dieses auch zu dem Einsatzelement 6 der vorangegangenen Figuren beschrieben ist. Prinzipiell ist der Befestigungspunkt B₄ aufgebaut wie der vorbeschriebene Befestigungspunkt B₁ des Einsatzelementes 6. Der Befestigungspunkt B₄ unterscheidet sich von dem vorbeschriebenen Befestigungspunkt B₁ dadurch, dass der Stützkern 8.1 durch zwei einander bezüglich der Längsachse gegenüber liegende Spalte 21, von denen in den Figuren nur einer der beiden Spalte 21 erkennbar ist, geschlitzt ausgeführt ist. Der Stützkern 8.1 verfügt über einen inneren Kanal, in den ein Sicherungsstift 22 eingreift und in axialer Richtung darin geführt ist. Zur Führung dienen Führungszapfen, die in die Spalte 21 eingreifen. An den Schaftabschnitt 11.1 des Stützkerns 8.1 ist bei diesem Ausführungsbeispiel ein Rückhalteflansch 10.1 an jeden der beiden Stützkernhalbschalen angeformt. Auf dem Schaftabschnitt 11.1 sitzt ein als Elastomerbauteil ausgeführter Stützkörper 9.1. Dieser ist in einer Seitenansicht in Figur 9 gezeigt. Der Stützkörper 9.1 verfügt ebenfalls über einen Stützabsatz 13.1 mit einer Anlagefläche 15.1 und einer gegenüberliegenden, über den Halteabschnitt 16.1 auskragenden Verriegelungsfläche 18.1. Die Verriegelungsfläche 18.1 ist geneigt.

Der maximale Durchmesser des Stützkerns 8.1 im Bereich seiner Rückhalteflansche 10.1 ist größer als der Durchmesser der den Montageflansch 7 durchgreifenden Montagebohrung. Mithin hintergreifen die Rückhalteflansche 10.1 die Montagebohrung des Fahrzeugrades 1. Der Durchmesser des die Verriegelungsfläche 18.1 bildenden Verriegelungsvorsprungs 17.1 des Stützkörpers 9.1 entspricht dem maximalen Durchmesser der Rückhalteflansche 10.1.

Figur 10 zeigt in einer Schnittdarstellung den Befestigungspunkt B₄ und den perspektivisch dahinter liegenden, benachbarten Befestigungspunkt B₅. Während der Befestigungspunkt B₄ in einer Stellung des Sicherungsstiftes 22 gezeigt ist, in der dieser eine Verstellbewegung der beiden Stützkernsegmente bzw. Stützkernhalbschalen im Bereich ihrer Rückhalteflansche 10.1 aufeinander zu verhindert, befindet sich der Sicherungsstift 22.1 bei dem Befestigungspunkt B₅ in einer Montagestellung. Die Sicherungsstifte 22, 22.1 sind gleich aufgebaut. Nachfolgend ist der Sicherungsstift 22 beschrieben. Dieselben Ausführungen gelten gleichermaßen somit auch für den Sicherungsstift 22.1.

Der Sicherungsstift 22 verfügt über einen Sperrabschnitt 23, dessen Außendurchmesser dem Innendurchmesser des inneren Kanals des Stützkörpers 8.1 entspricht. An den Sperrabschnitt 23 ist ein Kopf 24 zur Handhabung des Sicherungsstiftes 22 angeformt. In Richtung zum Einsatzelement 6.1 hin ist an den Sperrabschnitt 23 ein im Durchmesser reduzierter Abschnitt 25 angeformt. Befindet sich der Abschnitt 25 im Bereich der Rückhalteflansche 10.1, wie dieses bei dem Befestigungspunkt B₅ der Fall ist, können die beiden Stützkernhalbschalen im Bereich ihrer Rückhalteflansch 10.1 aufeinander zubewegt werden. Dann ist es möglich, diese durch die Montagebohrung zu bringen. In der in Figur 10 bezüglich des Befestigungspunktes B₄ gezeigten Sicherungsstellung des Sicherungsstiftes 22 ist diese Stellung zusätzlich durch eine Verrastung im unteren Bereich des Sicherungsstiftes 22 gegenüber dem Stützkern 8.1 gesichert. Diesem Zweck dienen zwei einander bezüglich der Längsachse des Sicherungsstiftes 22 gegenüber liegende Rastärmchen 26, die in komplementäre Durchbrechungen bzw. Öffnungen in dem Stützkern 8.1 eingreifen. Diese Rastärmchen 26 liegen in der Montagestellung bei herausgezogenem Sicherungsstift 22, 22.1 wie bei dem Befestigungspunkt B₅ gezeigt, an der Innenwandung des Kanals des Stützkerns 8.1 an. Ist das Einsatzelement 6.1 mit seinen Befestigungspunkten an dem Fahrzeugrad 1 montiert, werden die Sicherungsstifte 22, 22.1 eingeschoben. Dieses stellt zugleich eine Sichtkontrolle für einen bestimmungsgemäßen Anschluss des einen oder der mehreren Einsatzelemente 6.1 an dem Fahrzeugrad 1 dar.

Auch bei dem Ausführungsbeispiel der Figuren 7 bis 10 ist das Einsatzelement 6.1 ebenso wie dieses zu dem Ausführungsbeispiel der Figuren 1 bis 6 beschrieben ist, über Abstandselemente an der nach außen weisenden Seite des Fahrzeugrades 1 abgestützt. Auch gelten für den Stützkörper 9.1 mit seinem Verriegelungsvorsprung 17.1 hinsichtlich des Aufbringens einer Vorspannkraft auf das an das Fahrzeugrad 1 angeschlossene Einsatzelement 6.1 gleichermaßen, wie dieses zu dem Ausführungsbeispiel der Figuren 1 bis 6 beschrieben ist. Die aufgrund der Komprimierung des Verriegelungsvorsprunges 17.1 in axialer Richtung bewirkte Ausbauchung ist in Figur 10 angedeutet.

Aus der Beschreibung der Erfindung wird deutlich, dass sich ein Einsatzelement, wie beschrieben, nicht nur besonders einfach montieren lässt, sondern, dass sich zudem die günstigen Eigenschaften einer konventionellen Schraubverbindung realisieren lassen.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten diese umzusetzen, ohne dass diese im Rahmen dieser Ausführungen im Einzelnen erläutert werden müssen.

### Bezugszeichenliste

- 1: Fahrzeugrad
- 2: Raddurchbrechung
- 3, 3.1: Speiche
- 4: Nabenbereich
- 5: Felgenbett
- 6, 6.1: Einsatzelement
- 7, 7.1: Montageflansch
- 8, 8.1: Stützkern
- 9, 9.1: Stützkörper
- 10, 10.1: Rückhalteflansch
- 10a: Hohlkanal
- 11, 11.1: Schaftabschnitt
- 12: Stützleiste
- 13, 13.1: Stützabsatz
- 14: Grundfläche
- 15, 15.1: Anlagefläche
- 16, 16.1: Halteabschnitt
- 17, 17.1: Verriegelungsvorsprung
- 18, 18.1: Verriegelungsfläche
- 19: Hohlkammer
- 20: Steg
- 21: Spalt
- 22, 22.1: Sicherungsstift
- 23: Sperrabschnitt
- 24: Kopf
- 25: Abschnitt
- 26: Rastärmchen

- A: Abstandselement
- B₁ - B₅: Befestigungspunkt

## Patentansprüche

1. Einsatzelement für ein Fahrzeugrad, insbesondere ein Leichtmetallrad, mit mehreren, mit Abstand zueinander angeordneten, rückseitig am Einsatzelement (6, 6.1) angeordneten Stützkörpern zum Abstützen und Halten des an dem Fahrzeugrad (1) montierten Einsatzelementes (6, 6.1) an Stützflächen des Fahrzeugrades (1), wobei die Stützkörper einen zur Anlage an einer Stützfläche des Fahrzeugrades (1) bringbaren Stützabsatz (13, 13.1) und einen Befestigungsfortsatz mit einem axialen Hohlkanal (10a) und mit zumindest einem mit axialem Abstand zu dem Stützabsatz (13, 13.1) angeordneten, nach außen abragenden Verriegelungsvorsprung (17, 17.1) zum Hintergreifen einer die Stützfläche des Fahrzeugrades (1) durchgreifenden Montageöffnung aufweisen, **dadurch gekennzeichnet, dass** die Stützkörper (9, 9.1) als in radialer und axialer Richtung elastisch verformbare und mit ihrem Hohlkanal (10a) auf einem Stützkern (8, 8.1) sitzende Elastomerbauteile ausgeführt sind, welche Stützkerne (8, 8.1) einen radial abragenden Rückhalteflansch (10, 10.1) tragen und rückseitig an dem Einsatzelement (6, 6.1) gehalten sind, wobei jeder Stützkörper (9, 9.1) durch den Rückhalteflansch (10, 10.1) des diesen tragenden Stützkerns (8, 8.1) in axialer Richtung des Stützkernes (8, 8.1) formschlüssig gegenüber einem Abziehen von dem Stützkern (8, 8.1) gehalten ist.

2. Einsatzelement nach Anspruch 1, **dadurch gekennzeichnet, dass** der Verriegelungsvorsprung (17, 17.1) in radialer Richtung gegenüber dem radialen Abschluss des Rückhalteflansches (10) hervorsteht.

3. Einsatzelement nach Anspruch 2, **dadurch gekennzeichnet, dass** der Durchmesser der Mantelfläche des Rückhalteflansches (10) des Stützkerns (8) kleiner als der Durchmesser der zu durchgreifenden Montageöffnung des Fahrzeugrades (1) ist.

4. Einsatzelement nach Anspruch 1 oder 2, **dadurch gekennzeichnet, dass** der Durchmesser der Mantelfläche des Rückhalteflansches (10.1) des Stützkerns (8.1) größer als der Durchmesser der zu durchgreifenden Montageöffnung des Fahrzeugrades (1) ist und der Stützkern (8.1) ausgehend von seinem Rückhalteflansch (10.1) zumindest einen seiner Längserstreckung folgenden Spalt (21) mit einer Spaltweite aufweist, damit in Folge einer durch den Spalt ermöglichten Durchmesserverringerung des Rückhalteflansches (10.1) dieser durch die Montageöffnung des Fahrzeugrades (1) hindurchführbar ist.

5. Einsatzelement nach Anspruch 4, **dadurch gekennzeichnet, dass** der Stützkern (8.1) durch zumindest zwei Stützkernsegmente gebildet ist, die durch jeweils einen Spalt (21) voneinander beabstandet sind.

6. Einsatzelement nach Anspruch 5, **dadurch gekennzeichnet, dass** dem Einsatzelement (6.1) ein Sicherungselement (22, 22.1) zugeordnet ist, welches zwischen den Stützkernsegmenten ein Sicherungselement (22, 22.1) zum Blockieren einer ansonsten durch den Spalt (21) ermöglichten Durchmesserverringerung seines Rückhalteflansches (10.1) angeordnet ist.

7. Einsatzelement nach Anspruch 6, **dadurch gekennzeichnet, dass** die Stützkernsegmente nach Art von Halbschalen ausgebildet sind und dass das Sicherungselement (22, 22.1) einen im Durchmesser größeren Sperrabschnitt (23) aufweist, an den ein im Durchmesser dünnerer Führungsabschnitt (25) angeformt ist, welches Sicherungselement (22, 22.1) in dem durch die beiden Stützkernhalbschalen gebildeten Kanal in längsaxialer Richtung bewegbar ist und in der Sicherungsstellung mit seinem Sperrabschnitt (23) in den Kanal eingreift und in einer Nicht-Sicherungsstellung in den Kanal nicht eingreift, in welcher Nicht-Sicherungsstellung die beiden Halbschalen zur Durchmesserverringerung des Rückhalteflansches (10.1) gegeneinander verstellbar sind.

8. Einsatzelement nach einem der Ansprüche 4 bis 7, **dadurch gekennzeichnet, dass** die zum Hintergreifen der Montageöffnung vorgesehenen Bestandteile von Stützkörper (9.1) und Stützkern (8.1) - der Rückhalteflansch (10.1) und der Verriegelungsvorsprung (17.1) - eine kegelstumpfförmig ausgeführte Vorderseite aufweisen.

9. Einsatzelement nach einem der Ansprüche 1 bis 8, **dadurch gekennzeichnet, dass** der Verriegelungsvorsprung (17.1) an seiner zu dem Stützabsatz (13.1) weisenden Seite eine geneigt ausgeführte Verriegelungsfläche (18.1) umfasst.

10. Einsatzelement nach einem der Ansprüche 1 bis 9, **dadurch gekennzeichnet, dass** der Stützabsatz (13) ein Hohlkammerbauteil mit mehreren, in Umfangsrichtung durch jeweils einen in radialer Richtung verlaufenden Steg (20) voneinander getrennten Hohlkammern (19) ist.

11. Einsatzelement nach einem der Ansprüche 1 bis 10, **dadurch gekennzeichnet, dass** dem Stützkern (8, 8.1) im Bereich seines Anschlusses an das Einsatzelement (6, 6.1) mehrere mit Winkelabstand zueinander angeordnete Stützleisten (12) mit jeweils radialer Erstreckung zugeordnet sind, die sowohl an dem Stützkern (8, 8.1) als auch an dem Einsatzelement (6, 6.1) angeformt sind.

12. Einsatzelement nach einem der Ansprüche 1 bis 11, **dadurch gekennzeichnet, dass** sich zur Abstützung des Einsatzelementes (6) im Kontaktbereich zwischen Fahrzeugrad (1) und Einsatzelement (6) einsatzelementseitig mehrere steg- oder kalottenartige Vorsprünge als Abstandselemente (A) befinden, an denen das Fahrzeugrad in axialer Richtung und/oder in radialer Richtung der Stützkerne (8) anliegen kann und diese Anlage neben den Rückhalteflanschen (10) der Stützkerne (8) als Widerlager zum Aufbringen der gewünschten Verspannung dient.

13. Ein mehrere Öffnungen aufweisendes Fahrzeugrad, insbesondere ein Leichtmetallrad mit zumindest einem daran angeschlossenen Einsatzelement (6, 6.1), **dadurch gekennzeichnet, dass** das wenigstens eine Einsatzelement (6, 6.1) nach einem der Ansprüche 1 bis 12 ausgelegt ist.

14. Fahrzeugrad nach Anspruch 13, **dadurch gekennzeichnet, dass** die Fahrzeugradöffnungen (2) in Umfangrichtung des Fahrzeugrades (1) durch eine oder mehrere Speichen (3, 3.1) begrenzt sind.

15. Fahrzeugrad nach Anspruch 13 oder 14, **dadurch gekennzeichnet, dass** sich zur Abstützung des Einsatzelementes (6) im Kontaktbereich zwischen Fahrzeugrad (1) und Einsatzelement (6) radseitig mehrere steg- oder kalottenartige Vorsprünge als Abstandselemente (A) befinden, an denen das Einsatzelement (6) in axialer Richtung und/oder in radialer Richtung der Stützkerne (8) anliegt und diese Anlage neben den Rückhalteflanschen (10) der Stützkerne (8) als Widerlager zum Aufbringen der gewünschten Verspannung dient.

## Claims

1. Insert element for a vehicle wheel, in particular a lightweight metal wheel, with a plurality of supporting bodies arranged at a distance from one another on the rear side of the insert element (6, 6.1), for supporting and holding the insert element (6, 6.1) mounted on the vehicle wheel (1) on supporting surfaces of the vehicle wheel (1), wherein the supporting bodies comprise a supporting step (13, 13.1) which can be brought to bear against a supporting surface of the vehicle wheel (1) and a fastening extension with an axial hollow channel (10a) and with at least one outwardly protruding locking projection (17, 17.1), arranged at an axial distance from the support step (13, 13.1), for engaging behind an installation opening reaching through the supporting surface of the vehicle wheel (1), **characterised in that** the supporting bodies (9, 9.1) are designed as elastomer components which are elastically deformable in the radial and axial directions, and sit with their hollow channel (10a) on a supporting core (8, 8.1), which supporting cores (8, 8.1) bear a radially protruding retaining flange (10, 10.1) and are held on the rear side of the insert element (6, 6.1), wherein each supporting body (9, 9.1) is held by the retaining flange (10, 10.1) of the supporting core (8, 8.1) carrying this in a form-fitting manner (positive fit) in the axial direction of the supporting core (8, 8.1) against being pulled off from the supporting core (8, 8.1).

2. Insert element according to claim 1, **characterised in that** the locking projection (17, 17.1) projects in the radial direction opposite the radial termination of the retaining flange (10).

3. Insert element according to claim 2, **characterised in that** the diameter of the casing surface of the retaining flange (10) of the supporting core (8) is smaller than the diameter of the passage installation opening of the vehicle wheel (1).

4. Insert element according to claim 1 or 2, **characterised in that** the diameter of the casing surface of the retaining flange (10.1) of the supporting core (8.1) is greater than the diameter of the passage installation opening of the vehicle wheel (1), and the supporting core (8.1), moving outwards from its retaining flange (10.1), comprises at least one gap (21) following its longitudinal extension with a gap width, such that, as a consequence of a narrowing of the diameter of the retaining flange (10.1) made possible by the gap, this can be guided through the installation opening of the vehicle wheel (1).

5. Insert element according to claim 4, **characterised in that** the supporting core (8.1) is formed by at least two supporting core elements, which are spaced apart from one another in each case by a gap (21).

6. Insert element according to claim 5, **characterised in that** a securing element (22, 22.1) is assigned to the insert element (6.1), which securing element (22, 22.1) is arranged between the supporting core segments in order to block a reduction of the diameter of its retaining flange (10.1) which would otherwise be possible due to the gap (21).

7. Insert element according to claim 6, **characterised in that** the supporting core segments are configured in the form of half-shells, and that the securing element (22, 22.1) comprises a blocking section (23) which is greater in diameter, formed onto which is a guide section (25) which is thinner in diameter, which securing element (22, 22.1) can be moved in the channel formed through the two supporting core half-shells in a longitudinal axial direction, and in the securing position engages with its blocking section (23) into the channel, and does not engage into the channel in a non-securing position, in which non-securing position the two half-shells can be adjusted in relation to one another in order to reduce the diameter of the retaining flange (10.1).

8. Insert element according to any one of claims 4 to 7, **characterised in that** the component parts of supporting bodies (9.1) and supporting cores (8.1), provided for engaging behind the installation opening - the retaining flange (10.1) and the locking projection (17.1) - comprise a front side configured in the form of a truncated cone.

9. Insert element according to any one of claims 1 to 8, **characterised in that** the locking projection (17.1) comprises, on its side facing towards to the supporting step (13.1), a locking surface (18.1) which is configured as inclined.

10. Insert element according to any one of claims 1 to 9, **characterised in that** the supporting step (13) is a hollow chamber component with a plurality of hollow chambers (19), separated from one another in the circumferential direction in each case by a web (20) running in the radial direction.

11. Insert element according to any one of claims 1 to 10, **characterised in that** a plurality of supporting strips (12) are assigned to the supporting core (8, 8.1) in the region of its connection to the insert element (6, 6.1), arranged at an angular distance from one another, in each case with a radial extension, which are formed at both the supporting core (8, 8.1) as well as at the insert element (6, 6.1).

12. Insert element according to any one of claims 1 to 11, **characterised in that,** in order to support the insert element (6) in the contact region between the vehicle wheel (1) and the insert element (6), a plurality of projections in the form of webs or spherical caps are located on the insert element side, as spacer elements (A) with which the vehicle wheel can come in contact in the axial direction and/or in the radial direction of the supporting cores (8), and this contact, next to the retaining flanges (10) of the supporting cores (8), serves as an abutment bearing for applying the desired tensioning.

13. A vehicle wheel comprising a plurality of openings, in particular a lightweight metal wheel, with at least an insert element (6, 6.1) connected to it, **characterised in that** the at least one insert element (6, 6.1) is configured in accordance with any one of claims 1 to 12.

14. Vehicle wheel according to claim 13, **characterised in that** the vehicle wheel openings (2) are delimited in the circumferential direction of the vehicle wheel (1) by one or more spokes (3, 3.1).

15. Vehicle wheel according to claim 13 or 14, **characterised in that,** in order to support the insert element (6) in the contact region between the vehicle wheel (1) and the insert element (6), a plurality of web-shaped or spherical cap-shaped projections are present on the wheel side as spacer elements (A), with which the insert element (6) is in contact in the axial direction and/or in the radial direction of the supporting cores (8), and this contact, next to the retaining flanges (10) of the supporting cores (8), serves as an abutment bearing for applying the desired tensioning.

## Revendications

1. Accessoire pour une roue de véhicule, notamment une roue en métal léger, comportant au dos de l'accessoire (6, 6.1), plusieurs structures d'appui disposées à distance les unes des autres, destinées à supporter et maintenir l'accessoire (6, 6.1) monté sur la roue de véhicule (1) sur les surfaces d'appui de la roue de véhicule (1), les structures d'appui présentant un épaulement d'appui (13, 13.1), qui peut être mis en appui sur une surface d'appui de la roue de véhicule (1), et un prolongement de fixation avec un canal creux axial (10a) et avec au moins une saillie de verrouillage (17, 17.1) disposée à distance axiale de l'épaulement d'appui (13, 13.1), en saillie vers l'extérieur, afin de saisir par l'arrière une ouverture de montage traversant la surface d'appui de la roue de véhicule, **caractérisé en ce que** les structures d'appui (9, 9.1) sont conformées en tant que pièces en élastomère, déformables élastiquement dans le sens radial et axial, en assise par leur canal creux (10a) sur un noyau d'appui (8, 8.1), lesquels noyaux d'appui (8, 8.1) supportent une bride de retenue (10, 10.1) en saillie radiale et sont maintenus par la face arrière sur l'accessoire (6, 6.1), chaque structure d'appui (9, 9.1) étant maintenue par complémentarité de forme dans le sens axial du noyau d'appui (8, 8.1) par la bride de retenue (10, 10.1) du noyau d'appui (8, 8.1) supportant ce dernier, afin d'éviter qu'il ne se désolidarise du noyau d'appui (8, 8.1).

2. Accessoire selon la revendication 1, **caractérisé en ce que** la saillie de verrouillage (17, 17.1) est en saillie dans le sens radial par rapport à la terminaison radiale de la bride de retenue (10).

3. Accessoire selon la revendication 2, **caractérisé en ce que** le diamètre de la surface d'enveloppe de la bride de retenue (10) du noyau d'appui (8) est plus petit que le diamètre de l'ouverture de montage à traverser de la roue de véhicule (1).

4. Accessoire selon la revendication 1 ou 2, **caractérisé en ce que** le diamètre de la surface d'enveloppe de la bride de retenue (10.1) du noyau d'appui (8.1) est plus grand que le diamètre de l'ouverture de montage à traverser de la roue de véhicule (1) et le noyau d'appui (8.1) présente, en partant de sa bride de retenue (10.1), au moins une fente (21) suivant son étendue longitudinale, avec un écartement de fente, afin de permettre à la bride retenue (10.1), à la suite d'une réduction du diamètre permise par la fente, de passer à travers l'ouverture de montage de la roue de véhicule (1).

5. Accessoire selon la revendication 4, **caractérisé en ce que** le noyau d'appui (8.1) est conformé par au moins deux segments de noyau d'appui, écartés l'un de l'autre par respectivement une fente (21).

6. Accessoire selon la revendication 5, **caractérisé en ce qu'un** élément de sécurité (22, 22.1) est affecté à l'accessoire (6.1), lequel élément de sécurité (22, 22.1) est disposé entre les segments de noyau d'appui, afin de bloquer une réduction de diamètre de sa bride de retenue (10.1) qui, faute de quoi, serait possible en raison de la fente (21).

7. Accessoire selon la revendication 6, **caractérisé en ce que** les segments de noyau d'appui sont conformés à la manière de demi-coques et que l'élément de sécurité (22, 22.1) présente un tronçon de blocage (23) plus grand au niveau du diamètre, sur lequel est moulé un tronçon de guidage (25) plus fin au niveau du diamètre, lequel élément de sécurité (22, 22.1) peut être déplacé dans le sens de l'axe longitudinal dans le canal formé par les deux demi-coques de noyau d'appui et s'engage, en position de sécurité, par son tronçon de blocage (23) dans le canal, et ne s'engage pas dans le canal en l'absence de position de sécurité, les deux demi-coques étant positionnables l'une par rapport à l'autre en l'absence de position de sécurité, afin d'obtenir une réduction de diamètre de la bride de retenue (10.1).

8. Accessoire selon l'une des revendications 4 à 7, **caractérisé en ce que** les pièces constituantes de la structure d'appui (9.1) et du noyau d'appui (8.1), - à savoir la bride de retenue (10.1) et la saillie de verrouillage (17.1) - prévues pour saisir par l'arrière l'ouverture de montage, présentent une face avant conformée de manière tronconique.

9. Accessoire selon l'une des revendications 1 à 8, **caractérisé en ce que** la saillie de verrouillage (17.1) comporte sur sa face orientée vers l'épaulement d'appui (13.1) une surface de verrouillage (18.1) conformée inclinée.

10. Accessoire selon l'une des revendications 1 à 9, **caractérisé en ce que** l'épaulement d'appui (13) est une pièce creuse comportant, dans le sens périphérique, plusieurs espaces creux (19) séparés les uns des autres par respectivement un montant (20) s'étendant dans le sens radial.

11. Accessoire selon l'une des revendications 1 à 10, **caractérisé en ce que** plusieurs baguettes d'appui (12) s'étendant chacune dans le sens radial et disposées avec un écart angulaire l'une par rapport à l'autre sont affectées au noyau d'appui (8, 8.1) au niveau de sa jonction avec l'accessoire (6, 6.1), lesquelles sont moulées à la fois sur le noyau d'appui (8, 8.1) et sur l'accessoire (6, 6.1).

12. Accessoire selon l'une des revendications 1 à 11, **caractérisé en ce que** plusieurs avancées à la façon d'un montant ou d'une calotte se trouvent en tant qu'éléments écarteurs (A) du côté de l'accessoire, afin de supporter l'accessoire (6) au niveau de la zone de contact entre la roue de véhicule (1) et l'accessoire (6), sur lesquelles la roue de véhicule peut se mettre en appui dans le sens axial et/ou dans le sens radial des noyaux d'appui (8) et que cet appui fait office, en plus des brides de retenue (10) des noyaux d'appui (8), de contre-butée afin d'appliquer la tension de serrage souhaitée.

13. Roue de véhicule présentant plusieurs ouvertures, notamment une roue en métal léger, avec au moins un accessoire (6, 6.1) qui y est raccordé, **caractérisée en ce que** l'au moins un accessoire (6, 6.1) est conformé selon l'une des revendications 1 à 12.

14. Roue de véhicule selon la revendication 13, **caractérisée en ce que** les ouvertures (2) de roue de véhicule sont limitées dans le sens périphérique de la roue de véhicule (1) par un ou plusieurs rayons (3, 3.1).

15. Roue de véhicule selon la revendication 13 ou 14, **caractérisée en ce que** plusieurs avancées à la façon d'un montant ou d'une calotte se trouvent en tant qu'éléments écarteurs (A) du côté de la roue, afin de supporter l'accessoire (6) au niveau de la zone de contact entre la roue de véhicule (1) et l'accessoire (6), sur lesquelles l'accessoire (6) est en appui dans le sens axial et/ou dans le sens radial des noyaux d'appui (8) et que cet appui fait office, en plus des brides de retenue (10) des noyaux d'appui (8), de contrebutée afin d'appliquer la tension de serrage souhaitée.
